# FASCICULE DE BREVET EUROPEEN

(11) **EP 2 252 432 B1**
(45) Date de publication et mention de la délivrance du brevet: **08.05.2013**
(21) Numéro de dépôt: 09710857.5
(22) Date de dépôt: 06.02.2009
(51) Int. Cl.: B24B 27/06, C09K 3/14

(54) **POUDRE DE GRAINS ABRASIFS**
SCHLEIFKORNMISCHUNG
ABRASIVE GRAIN POWDER

(30) Priorité: 07.02.2008 FR 0850776
(43) Date de publication de la demande: 24.11.2010
(73) Titulaire: Saint-Gobain Centre de Recherches et d'Etudes Européen, 92400 Courbevoie (FR)
(72) Inventeur: BOUSSANT-ROUX, Yves, Lexington, Virginia 02420 (US); MOSBY, Jostein, N-4619 Mosby (NO); POPA, Ana-Maria, F-84300 Cavaillon (FR); MENNE, Arne, N-4810 Eydehavn (NO); BAKSHI, Abhaya, Kumar, Westford, Massachusetts 01886 (US)
(74) Mandataire: Sartorius, Jérome
(86) Numéro de dépôt international: PCT/FR2009/050186
(87) Numéro de publication internationale: WO 2009/101339

(56) Documents cités:
- EP-A- 0 395 088
- JP-A- 10 180 608
- JP-A- 2003 041 240

## Description

### Domaine technique

La présente invention concerne une poudre de grains abrasifs, notamment destinée à l'usinage de lingots de silicium, un outil abrasif, et notamment un fil abrasif, comportant de tels grains, et un procédé de sciage d'un lingot mettant en oeuvre une telle poudre ou un tel outil abrasif.

### Etat de la technique

Classiquement, la fabrication de galettes de silicium, appelées "wafers" en anglais, comporte une étape de sciage en tranches de lingots de silicium. A cet effet, les lingots de silicium sont poussés contre un fil abrasif tournant en boucle en se rechargeant en passant à travers d'une barbotine contenant des grains abrasifs en suspension.

Des procédés de sciage de lingots de silicium et des machines utilisables pour mettre en oeuvre ces procédés sont notamment décrits dans US 2006/249134, US 5,937,844 ou WO 2005/095076.

Les galettes de silicium peuvent être destinées à des applications électroniques ou à la fabrication de cellules photovoltaïques. Notamment dans cette dernière application, il existe un besoin pour fabriquer des galettes de silicium d'une épaisseur réduite, de l'ordre de 200 µm, afin de limiter la quantité de silicium nécessaire pour produire un Watt.

Il existe également un besoin pour des vitesses de sciage élevées afin d'augmenter la productivité.

Ces contraintes de faible épaisseur et de vitesse de sciage élevée conduisent cependant à des taux de rebut insatisfaisants. En effet, une proportion importante des galettes fabriquées présente des variations d'épaisseur selon leur longueur, des déformations ou des défauts à leur surface. Certaines galettes présentent même des amorces de fissures ou sont brisées lors du sciage.

Des recherches ont donc été engagées afin d'améliorer les performances des barbotines utilisées. En particulier JP 10-180 608 préconise l'utilisation de grains abrasifs sous la forme de plaquettes présentant une épaisseur au plus égale au quart de leur longueur et de leur largeur.

JP 2003-041240 préconise une dispersion des tailles des grains resserrée autour de la taille médiane. JP 2003-041240 précise également que le rapport d'aspect moyen devrait être supérieur ou égal à 0,59. Les grains divulgués dans JP 2003-041240 permettraient de réduire les variations d'épaisseur le long des galettes fabriquées. JP 2003-041240 ne s'intéresse cependant pas à la forme des grains au sein d'une tranche granulométrique déterminée.

Un but de l'invention est de résoudre au moins partiellement un ou plusieurs des problèmes susmentionnés, et en particulier d'améliorer la productivité des procédés de fabrication de galettes de silicium.

### Résumé de l'invention

L'invention propose une poudre de grains abrasifs, notamment destinée à l'usinage de lingots de silicium, ladite poudre étant telle que la fraction granulométrique D₄₀-D₆₀ comporte plus de 15% et moins de 80%, voire moins de 70%, ou moins de 50%, ou moins de 40%, en pourcentages volumiques, de grains présentant une circularité inférieure à 0,85, les percentiles D₄₀ et D₆₀ étant les percentiles de la courbe de distribution granulométrique cumulée des tailles de grains de la poudre correspondant aux tailles de grains permettant de séparer les fractions de la poudre constituées des 40% et 60% en pourcentages volumiques, respectivement, des grains de la poudre présentant les plus grandes tailles.

Comme on le verra plus en détail dans la suite de la description, la performance de la poudre selon l'invention pour scier des lingots est particulièrement remarquable.

Ce résultat est inexpliqué et surprenant.

D'abord parce que, lors d'une opération de sciage, ce sont les plus gros grains qui attaquent majoritairement le lingot à scier. L'homme du métier aurait donc été incité à favoriser l'allongement des grains pour les fractions granulométriques correspondant aux tailles de grains les plus grandes, sans imaginer que la présence d'une quantité importante de grains allongés dans des tranches granulométriques intermédiaires auraient pu améliorer les performances de la poudre.

Ensuite parce que les inventeurs ont découvert que, contrairement à l'enseignement de JP 10-180 608, la quantité de grains allongés dans ces fractions granulométriques intermédiaires doit être limitée. Un mélange de grains allongés et de grains arrondis permet avantageusement un bon empilement et un profil de répartition adapté des grains allongés, notamment dans une application à un outil abrasif, en particulier sur un fil de support. L'usure de l'outil abrasif est en outre plus homogène.

Les revendications dépendantes 2 à 13 concernent des modes de réalisation préféré de la poudre selon l'invention.

L'invention concerne encore un outil comportant des grains abrasifs selon l'invention fixés sur un support ou agglomérés les uns aux autres, notamment au moyen d'un liant. L'outil est un fil de support revêtu d'une barbotine selon l'invention, par exemple un fil abrasif destiné au sciage de lingots, et notamment de lingots de silicium.

L'invention concerne aussi un procédé de sciage d'un lingot au moyen d'un outil selon l'invention, et notamment d'un fil abrasif selon l'invention. Le lingot peut comporter pius de 50%, plus de 80%, plus de 90%, plus de 95%, plus de 99%, plus de 99,9%, voire 100% d'un constituant choisi parmi un matériau semi-conducteur, en particulier le silicium mono ou polycristallin, un arséniure, en particulier l'arséniure de gallium (GaAs), le phosphure d'indium (InP), un oxyde métallique, une ferrite. Le procédé peut être adapté pour obtenir, à l'issue du sciage, une galette d'une épaisseur inférieure à 200 µm, inférieure à 150 µm, voire inférieure ou égale à 100 µm.

### Définitions

- Par « grain », on entend un produit solide individualisé dans une poudre ou fixé sur un support.
- Par souci de clarté, on appelle ici "grain allongé " un grain présentant une circularité inférieure à 0,85, et "grain arrondi" un grain présentant une circularité supérieure ou égale à 0,85.
- On appelle « taille » Dₚ d'un grain la moyenne de sa plus grande dimension dM et de sa plus petite dimension dm : (dM+dm)/2.
- La « circularité » d'un grain est classiquement déterminée de la manière suivante : Les grains sont mis en suspension dans un fluide de manière à éviter toute floculation des grains, c'est-à-dire toute agglomération. Les inventeurs ont par exemple réalisé une suspension dans laquelle une poudre de SiC est dispersée dans de l'eau à l'aide de soude NaOH.

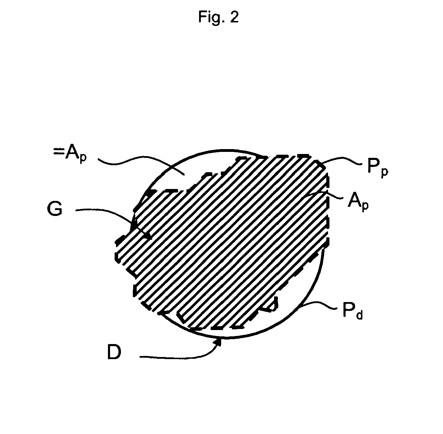

Une photographie de la suspension est prise et traitée au moyen d'un appareil de type SYSMEX FPIA 3000. Pour évaluer la circularité d'un grain, on détermine le périmètre P_{d} du disque D présentant une aire égale à l'aire Aₚ du grain G sur la photographie (voir la figure 2). On détermine par ailleurs le périmètre Pₚ de ce grain. La circularité est égale au rapport de P_{d}/Pₚ. Plus le grain est de forme allongée, plus la circularité est faible.

Le manuel d'utilisation du SYSMEX FPIA 3000 décrit également cette procédure (voir « detailed specification sheets » sur www.malvern.co.uk).
- On appelle classiquement « courbe de distribution granulométrique cumulée des tailles de grains de la poudre », la courbe de distribution granulométrique donnant :
   - en ordonnées, des pourcentages tels qu'un pourcentage de p% représente la fraction de la poudre regroupant les p%, en volume, des grains présentant les tailles les plus grandes, et
   - en abscisses, les tailles de grain Dₚ, Dₚ étant la plus petite taille de grains possible dans la fraction de la poudre représentée par le pourcentage p% en abscisses.

Une telle courbe granulométrique peut être réalisée à l'aide d'un granulomètre laser. Le dispositif SYSMEX FPIA 3000 permet avantageusement d'obtenir de telles courbes. On appelle classiquement « percentile » ou « centile » Dₚ la taille de grain (en abscisses sur la courbe susmentionnée) correspondant au pourcentage, en volume, de *p* % en abscisses. Par exemple, 10 %, en volume, des grains de la poudre ont une taille supérieure ou égale à D₁₀ et 90 % des grains, en volume, ont une taille strictement inférieure à D₁₀.

On désigne par « Dₚ-D_{q} » la fraction granulométrique comprenant l'ensemble des grains présentant une taille supérieure ou égale à Dq et inférieure ou égale à Dₚ.

On désigne par « S(Dₚ-D_{q}) » le pourcentage volumique de grains allongés dans la fraction granulométrique Dₚ-D_{q}.

On désigne par « Δₙ₋ₘ₋ₚ » le rapport (S(Dₙ-Dₘ)-S(Dₘ-Dₚ)) / S(Dₘ-Dₚ) en pourcentage. Par exemple Δ₃₋₁₀₋₂₀ = (S(D₃-D₁₀)-S(D₁₀-D₂₀)) /S(D₁₀-D₂₀). Δₙ₋ₘ₋ₚ indique donc la croissance relative de la proportion de grains allongés de la fraction granulométrique Dₙ-Dₘ à la fraction granulométrique Dₘ-Dₚ.

### Brève description de la figure

D'autres caractéristiques et avantages de l'invention apparaîtront encore à la lecture de la description qui va suivre et à l'examen du dessin, dans lequel
- la figure 1 représente l'évolution, d'une fraction granulométrique à la suivante, de la proportion de grains allongés, pour différentes poudres testées, et
- la figure 2 illustre la méthode utilisée pour déterminer la circularité des grains.

### Description détaillée

### Procédé de fabrication

Tous les procédés connus pour fabriquer des grains abrasifs peuvent être utilisés afin de fabriquer des grains arrondis et des grains allongés. Pour fabriquer des grains allongés, on peut notamment se référer à la description de JP 2003-041240.

En fonction de la proportion de grains allongés fabriqués, des étapes de classification, de tri, par exemple par tamisage, ou de mélange de différentes fractions granulométriques peuvent être nécessaires afin d'obtenir des proportions de grains allongés correspondant à celles d'une poudre selon l'invention.

Une poudre selon l'invention peut par exemple être fabriquée suivant un procédé comportant au moins les étapes suivantes :
a) synthèse d'un corps massif, de préférence au moins millimétrique, c'est-à-dire dont toutes les dimensions dépassent au moins 1 mm, de préférence par réaction, notamment par carboréduction, par exemple par carboréduction de la silice afin de produire du carbure de silicium (SiC), frittage sous pression (« IP »), pressage isostatique à chaud (« HIP »), SPS (« Spark Plasma Sintering » ou frittage flash), ou encore par fusion, notamment par électrofusion.
b) réduction éventuelle dudit corps massif en un ensemble de particules, éventuellement par concassage ;
c) de préférence, sélection, par exemple par tamisage, des particules présentant une taille supérieure à la taille maximale des grains D_{0,5} de la poudre à fabriquer et, de préférence, sélection des particules présentant une taille au moins 2 fois supérieure à cette taille maximale et/ou inférieure à 4 fois cette taille maximale ;
d) broyage du corps massif obtenu à l'étape a) ou des particules obtenues à l'étape b) ou à l'étape c), de préférence dans des conditions favorisant les contraintes de cisaillement, en particulier au moyen d'un broyeur à rouleaux ;
e) le cas échéant, sélection de grains issus de l'étape d) et appartenant à des plages granulométriques déterminées de manière que la poudre obtenue soit conforme à l'invention ;
f) optionnellement, déferrage afin d'éliminer les éventuelles particules magnétiques introduites lors du broyage réalisé à l'étape d) ;
g) optionnellement, traitement thermique ou chimique permettant l'élimination d'espèces chimiques indésirables, par exemple la silice ou un excès de carbone dans le cas d'une poudre de carbure de Silicium (SiC) ;
h) optionnellement, vérification de la qualité de la poudre, de préférence par échantillonnage.

A l'étape a), l'objectif est de fabriquer des corps massifs présentant une résistance suffisante pour « éclater » lors du broyage. Autrement dit, il ne faut pas que les corps massifs préparés soient de simples agglomérations de grains susceptibles de s'effriter lors du broyage, un tel effritement ne permettant pas d'obtenir suffisamment de grains allongés pour une exploitation industrielle. Tous les procédés de synthèse sont envisageables, de simples essais permettant de rechercher les conditions les plus favorables.

A l'étape b), optionnelle, les corps massifs sont réduits, par exemple concassés, de façon à augmenter la quantité de particules susceptibles d'être sélectionnées lors de l'étape optionnelle c).

L'étape c), optionnelle, a pour objectif de garantir qu'après éclatement des particules introduites dans le broyeur, les grains obtenus en sortie du broyeur présenteront des tailles suffisantes pour que la poudre reste relativement grossière.

A cet effet, il est préférable que la taille minimale des corps massifs ou des particules entrant dans le broyeur soit au moins deux fois supérieure à la taille maximale des grains de la poudre à fabriquer.

A l'étape d), on utilise un broyeur favorisant les contraintes de cisaillement, de préférence un broyeur à rouleaux.

Les broyeurs par attrition ne sont pas adaptés pour fabriquer efficacement une quantité élevée de grains allongés.

Dans le cas d'un broyeur à rouleaux, l'écartement des rouleaux peut être réglé de manière que la poudre broyée soit une poudre selon l'invention.

Une étape supplémentaire e), optionnelle si la poudre obtenue à l'issue de l'étape d) est conforme à l'invention, peut être ensuite mise en oeuvre afin de sélectionner les plages granulométriques préférées. Cette étape peut comprendre une classification, de préférence par élutriation, c'est-à-dire par séparation selon la densité par agitation dans de l'eau. Cette technique est en effet bien adaptée à la granulométrie fine des grains d'une poudre selon l'invention.

Une étape optionnelle f) peut également être mise en oeuvre afin d'éliminer par déferrage les particules magnétiques notamment introduites lors de l'étape d). De préférence, cette étape est réalisée à l'aide d'un déferreur à haute intensité.

Le cas échéant, dans une étape ultérieure optionnelle h), la qualité de la poudre obtenue suite au broyage est vérifiée, de préférence par échantillonnage, par exemple au microscope, au microscope électronique à balayage ou par tout moyen connu permettant de contrôler la forme des grains.

A l'issue de ce procédé, on obtient une poudre selon l'invention.

### Poudre

Quel que soit le mode de réalisation principal envisagé, une poudre de grains selon l'invention peut présenter une ou plusieurs des caractéristiques décrites ci-après, dans la mesure où ces caractéristiques ne sont pas incompatibles avec ce mode de réalisation principal.

Les grains abrasifs sont de préférence en un matériau présentant une microdureté Vickers HV_{0,5} supérieure à 7 GPa.

La nature des grains abrasifs peut être notamment celle des grains abrasifs utilisés jusqu'à aujourd'hui comme matériaux de polissage ou de sciage. En particulier, les grains peuvent être en un matériau choisi dans le groupe constitué par le carbure de silicium, l'oxyde de cérium, le diamant, le nitrure de bore, l'alumine, la zircone, la silice et des combinaisons d'un ou plusieurs de ces matériaux. De tels grains abrasifs sont disponibles dans le commerce. A titre d'exemple, on peut citer le carbure de silicium GC™ (Green Silicon Carbide) et C™ (Black Silicon Carbide) fabriqués par FUJIMI Inc ou SIKA^{™} fabriqués par Saint-Gobain Materials à Lillesand en Norvège. Les poudres d'alumine peuvent être choisies par exemple parmi FO (Fujimi Optical Emery), A (Regular Fused Alumina), WA (White Fused Alumina) et PWA (Platelet Calcined Alumina) fabriquées par FUJIMI Inc.

Des grains de carbure de silicium sont particulièrement avantageux.

Dans un mode de réalisation préféré, les grains abrasifs comportent plus de 95% de carbure de silicium, en pourcentage massique. Les derniers 2,5% peuvent être des impuretés. Par « impuretés », on entend les constituants inévitables, introduits nécessairement avec les matières premières lors de la fabrication des grains. En particulier les composés faisant partie du groupe des oxydes, nitrures, oxynitrures, carbures, oxycarbures, carbonitrures et espèces métalliques de sodium et autres alcalins, fer, vanadium et chrome sont généralement des impuretés. A titre d'exemples, on peut citer CaO, Fe₂O₃ ou Na₂O.

Les grains de carbure de silicium présentent de préférence une densité supérieure à 3,0. De préférence, le carbure de silicium est cristallisé sous forme alpha.

Dans un mode de réalisation, le percentile D₂₀ est supérieur à 9 µm, supérieur à 11 µm, voire supérieur à 12 µm et/ou inférieur à 15 µm, inférieur à 14 µm, voire inférieur à 13 µm.

Le percentile D₄₀ peut être supérieur à 10 µm, supérieur à 15 µm, voire supérieur à 18 µm ou supérieur à 20 µm et/ou être inférieur à 25 µm, voire inférieur à 23 µm, ou inférieur à 22 µm.

La taille médiane D₅₀ peut être inférieure à 60 µm, inférieure à 50 µm, inférieure à 40 µm, inférieure à 30 µm, inférieure à 25 µm, inférieure à 20 µm et/ou supérieure à 1 µm, supérieure à 3 µm, supérieure à 5 µm, supérieure à 7 µm, supérieure à 10 µm, supérieure à 12 µm, supérieure à 15 µm, voire supérieure à 18 µm.

Le percentile D₆₀ peut être supérieur à 8 µm, supérieur à 10 µm, supérieur à 14 µm, voire supérieur à 16 µm et/ou inférieur à 20 µm, ou inférieur à 19 µm, voire inférieur à 18 µm.

La fraction granulométrique D₂₀-D₄₀ peut comporter plus de 12%, plus de 15%, plus de 17%, plus de 20%, plus de 23%, voire plus de 25%, en pourcentage volumique, de grains présentant une circularité inférieure à 0,85.

La fraction granulométrique D₄₀-D₆₀ peut comporter plus de 17%, plus de 20%, plus de 23%, voire plus de 25%, en pourcentage volumique, de grains présentant une circularité inférieure à 0,85.

Dans un mode de réalisation particulier, la fraction granulométrique D₄₀-D₆₀ comporte plus de 17%, voire plus de 20%, en pourcentage volumique, de grains présentant une circularité inférieure à 0,85 et la taille médiane est supérieure à 12 µm, 15 µm, voire 17 µm ou 18 µm.

Dans un mode de réalisation particulier, la fraction granulométrique D₂₀-D₄₀ comporte plus de 15%, plus de 18%, voire plus de 20% ou plus de 21%, en pourcentage volumique, de grains présentant une circularité inférieure à 0,85 et la taille médiane est inférieure à 12 µm, voire inférieure à 10 µm.

Dans un mode de réalisation, la fraction granulométrique D₂₀-D₄₀ comporte plus de 5 %, voire plus de 6%, en pourcentages en nombre, de grains présentant une circularité inférieure à 0,85.

Dans un mode de réalisation, la fraction granulométrique D₄₀-D₆₀ comporte plus de 5%, plus de 6%, voire plus de 7%, plus de 8%, plus de 10%, voire plus de 11 % et/ou moins de 20%, moins de 15%, moins de 13%, voire moins de 12%, en pourcentages en nombre, de grains présentant une circularité inférieure à 0,85. Cette caractéristique est notamment applicable à une poudre présentant une taille médiane D₅₀ comprise entre 12 et 20 µm.

Cependant les inventeurs ont découvert que, contrairement à l'enseignement de JP 10-180 608, il n'est pas avantageux que l'ensemble des grains présente une forme allongée. En particulier, dans les fractions granulométriques D₂₀-D₄₀ ou D₄₀-D₆₀, le pourcentage volumique de grains présentant une circularité inférieure à 0,85 et de préférence limité à 40%.

Le pourcentage volumique de ces grains dans les fractions granulométriques D₂₀-D₄₀ et/ou D₄₀-D₆₀ peut être inférieur à 35%, voire 30%, ou même 26%.

Le rapport du pourcentage volumique S(D₄₀-D₆₀) de grains présentant une circularité inférieure à 0,85 dans la fraction granulométrique D₄₀-D₆₀ sur le diamètre médian D₅₀, ou « rapport R₄₀-₆₀ », peut être supérieur à 0,85 et inférieur à 2.

Lorsqu'ils sont utilisés sur un fil abrasif, ces grains permettent avantageusement de limiter la déformation et la tension du fil.

Ce rapport peut être supérieur à 0,9, supérieur à 1,0, supérieur à 1,1, supérieur à 1,2, supérieur à 1,3, voire supérieur à 1,4.

Dans un mode de réalisation, ce rapport peut être inférieur à 1,4.

### Barbotine

Une poudre selon l'invention peut notamment être utilisée pour fabriquer une barbotine.

Une barbotine comporte classiquement une poudre de grains abrasifs en suspension dans un liant liquide ou pâteux. Le liant peut notamment être un liant organique. Le liant comporte généralement de l'eau, un matériau de base et un ou plusieurs additifs.

La quantité d'eau est de préférence comprise entre 10 et 75% en masse par rapport à la masse de la barbotine.

Le matériau de base peut être choisi parmi les hydroxydes de métaux alcalins, comme l'hydroxyde de lithium, l'hydroxyde de sodium et l'hydroxyde de potassium, les hydroxydes d'alcalino-terreux, tels que l'hydroxyde de magnésium, l'hydroxyde de calcium et l'hydroxyde de baryum, et des combinaisons de ces différents matériaux. La teneur de ce matériau de base est classiquement comprise entre 3,5% et 20% en masse par rapport à la masse totale liquide de la barbotine.

Parmi les additifs, on utilise généralement au moins un lubrifiant.

Un lubrifiant peut être notamment choisi parmi le polyéthylène glycol, le benzotriazol, l'acide oléique et des mélanges de ces derniers. Un lubrifiant peut être par exemple du Rikamultinole fabriqué par la société Rikashokai ou le Lunacoolant fabriqué par Daichikagaku. La teneur en lubrifiant est de préférence comprise entre 0 et 50% en masse par rapport à la masse de la barbotine.

La barbotine peut être fabriquée en mélangeant simplement les matières premières susmentionnées. Un procédé de fabrication d'une barbotine est notamment décrit dans US 2006/0 249 134.

### Outils

Pour le sciage de lingots de silicium, la barbotine est classiquement disposée sur un fil de support présentant par exemple une épaisseur comprise entre 0,06 mm et 0,25 mm.

Le fil de support peut notamment être constitué en acier dur ou en un alliage tel qu'un alliage nickel chrome ou un alliage fer nickel ou en un métal présentant un point de fusion élevé tel que le tungstène ou le molybdène ou être en fibre de polyamide.

### Procédé d'usinage

Suivant un procédé classique de sciage, comme expliqué en introduction, un fil abrasif, guidé par des galets, tourne en boucle en passant à travers une barbotine afin de se recharger en grains abrasifs. Il frotte sur un lingot à scier, typiquement de l'ordre de 200 mm de longueur et diamètre, de manière à découper une tranche, ou « galette », de ce lingot.

Le lingot peut en particulier être un lingot de silicium polycristallin de pureté supérieure à 99,99% en masse.

Suivant un mode de réalisation du procédé d'usinage selon l'invention, la galette est sciée de manière à présenter une épaisseur inférieure à 200 µm, inférieure à 180 µm, inférieure à 150 µm, inférieure à 130 µm, inférieure à 120 µm, voire inférieure à 100 µm.

### Essais

Différents mélanges de grains de carbure de silicium ont été testés.

Le tableau 1 suivant donne les valeurs des différents percentiles de ces différents mélanges.

**Tableau 1**

| Exemple | 1 | Réf. 1 | 2 | Réf. 2 | 3 | Réf. 3 | Réf. 4 | Réf. 5 |
|---|---|---|---|---|---|---|---|---|
| Percentile (µm) | | | | | | | | |
| D₉₇ | 10,1 | 12,0 | 6,7 | 7,6 | 4,9 | 5,8 | | |
| D₈₀ | 14,3 | 15,1 | 10,4 | 10,1 | 7,4 | 8,5 | | |
| D₆₀ | 17,0 | 16,6 | 12,8 | 21,0 | 9,0 | 10,1 | 7,0 | 7,2 |
| D₅₀ | 19,2 | 17,6 | 14,4 | 12,9 | 9,6 | 10,8 | 7,6 | 7,6 |
| D₄₀ | 21,0 | 19,3 | 15,3 | 13,6 | 10,5 | 11,8 | 8,4 | 8,35 |
| D₂₀ | 26,6 | 23,0 | 19,4 | 15,8 | 12,6 | 13,7 | 0,0 | 10,0 |
| D₁₀ | 32,6 | 27,5 | 23,1 | 17,8 | 14,2 | 15,4 | 11,6 | 11,2 |
| D₃ | 51,8 | 42,4 | 29,1 | 21,4 | 18,9 | 27,5 | 13,5 | 20,6 |

Le tableau 2 fournit, pour ces mélanges, le pourcentage volumique de grains allongés S% dans les différentes tranches granulométriques.

**Tableau 2**

| | S% | | | | | | | |
|---|---|---|---|---|---|---|---|---|
| | 1 | Réf. 1 | 2 | Réf. 2 | 3 | Réf. 3 | Réf. 4 | Réf. 5 |
| D₈₀-D₉₇ | 15,5 | 5,4 | 12,9 | 7,3 | 6,6 | 7,7 | | |
| D₆₀-D₈₀ | 20,4 | 3,1 | 16,6 | 5,9 | 13,2 | 8,8 | | |
| D₄₀-D₆₀ | 25,4 | 5,4 | 21,2 | 6,7 | 17,4 | 8,7 | 12,2 | 4,6 |
| D₂₀-D₄₀ | 31,5 | 14,9 | 24,4 | 10,2 | 21,9 | 12,9 | 37,5 | 20,9 |
| D₁₀-D₂₀ | 42,3 | 31,4 | 36,4 | 22,0 | 25,4 | 20,9 | | |
| D₃-D₁₀ | 54,0 | 69,0 | 46,7 | 41,2 | 40,3 | 34,7 | 16,3 | 6,4 |

Le tableau 3 fournit, pour les mélanges testés, le pourcentage en nombre de grains allongés N% dans certaines tranches granulométriques.

**Tableau 3**

| Exemple | Fraction | N% |
|---|---|---|
| | D₃-D₁₀ | 1,4 |
| 1 | D₂₀-D₄₀ | 5,5 |
| | 0₄₀-0₆₀ | 11,6 |
| | D₃-D₁₀ | 2,6 |
| Réf. 1 | D₂₀-D₄₀ | 7,2 |
| | D₄₀-D₆₀ | 14,8 |
| | D₃-D₁₀ | 1,1 |
| 2 | D₂₀-D₄₀ | 4,6 |
| | D₄₀-D₆₀ | 7,9 |
| | D₃-D₁₀ | 3,0 |
| Réf. 2 | D₂₀-D₄₀ | 8,9 |
| | D₄₀-D₆₀ | 12,9 |
| | D₃-D₁₀ | 1,8 |
| 3 | D₂₀-D₄₀ | 6,9 |
| | D₄₀-D₆₀ | 10,4 |
| | D₃-D₁₀ | 2,4 |
| Réf. 3 | D₂₀-D₄₀ | 6,6 |
| | D₄₀-D₆₀ | 12,0 |
| Réf 4 | D₃-D₁₀ | 0,8 |
| | D₂₀-D₄₀ | 6,4 |
| | D₄₀-D₆₀ | 10,5 |
| Réf. 5 | D₃-D₁₀ | 0,85 |
| | D₂₀-D₄₀ | 5,8 |
| | D₄₀-D₆₀ | 10,8 |

Les exemples de référence Réf. 1, Réf. 2, Réf. 3, Réf. 5 sont des mélanges commercialisés par le Société Saint-Gobain Materials sous la marque SIKA et avec les références F500, F600, F800 et F1000, respectivement.

Des barbotines ont ensuite été préparées à partir de ces différentes poudres, d'une manière similaire à celle de l'exemple décrit dans JP 2003-041240. La proportion était de 1 Kg de SiC pour 1 L de polyéthylène glycol de type PEG, de masse moléculaire 200. Les barbotines ont ensuite été utilisées afin de scier un lingot de silicium, suivant le protocole décrit dans l'exemple de JP 2003-041240.

La vitesse d'usinage du lingot de silicium par le fil abrasif (qui frotte sur le lingot dans un plan perpendiculaire à la direction de l'avancement du lingot de silicium), c'est-à-dire le nombre de lingots sciés par unité de temps, a été mesurée, chaque fois dans les mêmes conditions.

Les vitesses obtenues avec des barbotines fabriquées à partir des poudres 1, 2 et 3 ont été comparés aux vitesses obtenues avec des barbotines fabriquées à partir de poudres abrasives "Réf. 1", "Réf. 2", et "Réf. 3", respectivement, qui sont de même nature et présentent sensiblement les mêmes tailles médianes que les poudres 1, 2 et 3, respectivement. Le rapport entre la vitesse obtenue avec les barbotines 1, 2, 3 et la vitesse obtenue avec les barbotines "Réf. 1", "Réf. 2" et "Réf. 3", appelé "gain G' ", permet notamment de mesurer l'impact de la distribution granulométrique particulière des poudres selon l'invention à taille médiane sensiblement constante.

Le gain G' pour les exemples « Réf. 4 » et « Réf. 5 » correspondent à des comparaisons avec les résultats obtenus avec l'exemple « Réf. 3. »

Le rapport R, égal à S% divisé par la taille médiane D₅₀, a été calculé.

### Résultats

Les résultats obtenus sont résumés dans le tableau 4 suivant :

**Tableau 4**

| Exemple | Fraction | D₅₀ (µm) | N% | S% | R = S% / D₅₀ | R₄₀₋₆₀ = S(D₄₀-D₆₀)/D₅₀ | G'(%) |
|---|---|---|---|---|---|---|---|
| 1 | D₄₀-D₆₀ | 19,2 | 11,6 | 25,4 | 1,32 | 1,32 | 154 |
| Réf. 1 | D₄₀-D₆₀ | 17,6 | 14,8 | 5,4 | 0,30 | 0,31 | 100 |
| 2 | D₄₀-D₆₀ | 14,4 | 7,9 | 21,2 | 1,47 | 1,47 | 156 |
| Réf. 2 | D₄₀-D₆₀ | 12,8 | 12,9 | 6,7 | 0,52 | 0,52 | 100 |
| 3 | D₄₀-D₆₀ | 9,6 | 6,9 | 17,4 | 1,81 | 1,81 | 112 |
| | D₂₀-D₄₀ | | | 21,9 | 2,28 | | |
| Réf. 3 | D₄₆-D₆₀ | 10,8 | 12,0 | 8,7 | 0,81 | 0,80 | 100 |
| | D₂₀-D₄₀ | | | 12,9 | 1,19 | | |
| Réf 4 | D₃-D₁₀ | 7,6 | 0,8 | 16,3 | 2,14 | | |
| | D₂₀-D₄₀ | | 6,4 | 37,5 | 4,93 | | 85 |
| | D₄₀-D₆₀ | | | 12,2 | 1,60 | 1,60 | |
| Réf. 5 | D₃-D₁₀ | 7,6 | 0,85 | 6,4 | 0,84 | | |
| | D₂₀-D₄₀ | | 5,8 | 20,9 | 2,75 | | 85 |
| | D₄₀-D₆₀ | | | 4,6 | 0,60 | 0,61 | |

Sauf pour l'exemple « Réf. 5 », « Réf. » indique que l'exemple est un exemple de référence pour l'exemple qui le précède dans le tableau. Pour l'exemple « Réf. 5 », l'exemple de référence est l'exemple « Réf. 3 ».

Les résultats obtenus montrent que, pour des tailles médianes D₅₀ supérieures à 8 µm, les poudres de grains selon l'invention conduisent à des performances très nettement supérieures à celles obtenues avec des poudres de référence comparables. Une poudre selon l'invention permet ainsi une vitesse de sciage élevée, c'est-à-dire une bonne productivité, mais aussi la fabrication de galettes, notamment de silicium, d'une épaisseur très fine, et notamment inférieure à 180 µm, voire inférieure à 150 µm, voire de l'ordre de 100 µm, avec un taux de rebut faible.

La poudre de l'exemple 1 est considérée comme préférée entre toutes, la vitesse de sciage étant maximale pour cet exemple.

Les poudres présentant des tailles médianes D₅₀ inférieures à 8 µm, les performances sont plus faibles.

Par ailleurs, les distributions des grains allongés dans les différentes fractions granulométriques des poudres testées ont été comparées. Si la proportion de grains allongés évolue dans le même sens lorsque l'on passe d'une tranche granulométrique à la suivante, les inventeurs ont constaté, comme le montre le tableau 5 ci-dessous, que cette évolution est beaucoup pius régulière avec les poudres selon l'invention.

**Tableau 5**

| Exemple | Δ₃₋₁₀₋₂₀ | Δ₁₀₋₂₀₋₄₀ | Δ₂₀₋₄₀₋₆₀ | Δ₄₀₋₆₀₋₈₀ | Δ₆₀₋₈₀₋₉₇ |
|---|---|---|---|---|---|
| 1 | 28 | 34 | 24 | 24 | 32 |
| Réf. 1 | 120 | 111 | 173 | 74 | -42 |
| 2 | 28 | 49 | 15 | 28 | 28 |
| Réf. 2 | 88 | 116 | 52 | 14 | -20 |
| 3 | 59 | 16 | 26 | 32 | 99 |
| Réf. 3 | 66 | 62 | 49 | -2 | 15 |
| Réf 4 | 58 | 45 | 33 | 70 | 62 |
| Réf. 5 | 183 | 15 | 38 | 11 | 4 |

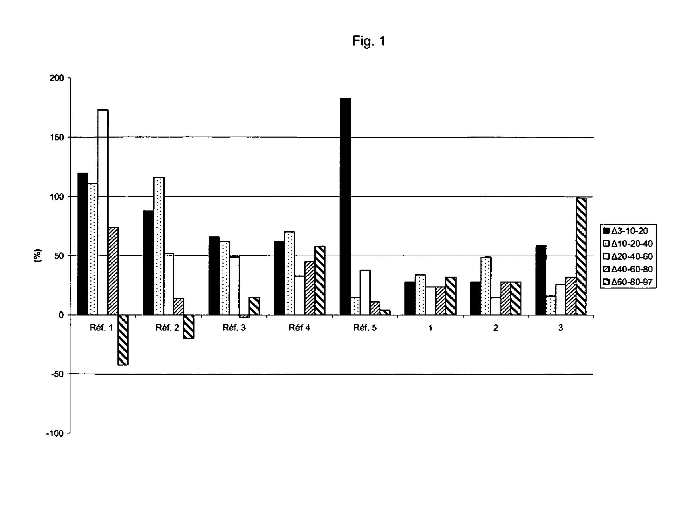

La figure 1 permet de visualiser ces résultats sous forme d'un graphique.

Il apparaît que les poudres selon l'invention présentent des variations dans la teneur en grains allongés plus faibles, en valeurs absolues, que les autres poudres, dans les tranches granulométriques intermédiaires, et en particulier pour les valeurs de Δ₂₀₋₄₀₋₆₀. De manière remarquable, Δ₂₀₋₄₀₋₆₀ est en particulier toujours inférieur à 30%, voire inférieur à 25%.

Les variations de Δ₄₀₋₆₀₋₈₀ des poudres selon l'invention sont toutes comprises entre 24% et 32%.

Les variations de Δ₁₀₋₂₀₋₄₀ des poudres selon l'invention sont toutes comprises entre 16% et 49%.

Comme cela apparaît clairement à présent, l'invention fournit une poudre de grains particulièrement performante comme poudre abrasive, en particulier pour découper des galettes de silicium. Avec une poudre selon l'invention, il est ainsi notamment possible de fabriquer des cellules photovoltaïques présentant un rendement entre la quantité d'énergie électrique générée et la quantité de silicium utilisée particulièrement intéressant.

Bien entendu, l'invention n'est cependant pas limitée aux modes de réalisation décrits ci-dessus, fournis à titre d'exemples illustratifs.

En particulier, une poudre de grains selon l'invention pourrait être utilisée dans d'autres applications qu'un fil abrasif. Elle pourrait notamment être utilisée pour fabriquer d'autres outils de sciage ou, plus généralement, d'autres outils d'usinage.

## Revendications

1. Poudre de grains abrasifs, notamment destinée à l'usinage de lingots de silicium, ladite poudre étant telle que la fraction granulométrique D₄₀-D₆₀ comporte plus de 15% et moins de 80%, en pourcentages volumiques, de grains présentant une circularité (S) inférieure à 0,85, les percentiles D₄₀ et D₆₀ étant les percentiles de la courbe de distribution granulométrique cumulée des tailles de grains de la poudre, correspondant aux tailles de grains permettant de séparer les fractions de la poudre constituées des 40% et 60% en pourcentages volumiques, respectivement, des grains de la poudre présentant les plus grandes tailles.

2. Poudre selon la revendication précédente, dans laquelle le rapport R₄₀-₆₀ du pourcentage volumique S(D₄₀-D₆₀) de grains présentant une circularité inférieure à 0,85 dans la fraction granulométrique D₄₀-D₆₀ divisé par le diamètre médian D₅₀ est supérieur à 0,85 et inférieur à 3,5.

3. Poudre selon la revendication précédente, dans laquelle le rapport R₄₀-₆₀ du pourcentage volumique S(D₄₀-D₆₀) de grains présentant une circularité inférieure à 0,85 dans la fraction granulométrique D₄₀-D₆₀ divisé par le diamètre médian D₅₀ est supérieur à 0,85 et inférieur à 2,0.

4. Poudre selon l'une quelconque des revendications précédentes, dans laquelle
10% < Δ₂₀₋₄₀₋₆₀ < 30%, ou
15% < Δ₄₀₋₆₀₋₈₀ < 60%,
Δ ₙ₋ₘ₋ₚ étant le rapport (S(Dₙ-Dₘ)-S(Dₘ-Dₚ)) / S(Dₘ-Dₚ) en pourcentage,
S(Dᵢ-Dⱼ) étant le pourcentage volumique de grains présentant une circularité inférieure à 0,85 dans la fraction granulométrique Dᵢ-Dⱼ.

5. Poudre selon l'une quelconque des revendications 1 à 3, dans laquelle
10% < Δ₂₀₋₄₀₋₆₀ < 30%, et
15% < Δ₂₀₋₄₀₋₆₀ < 60%.

6. Poudre selon l'une quelconque des revendications précédentes, dans laquelle la fraction granulométrique D₂₀-D₄₀ comporte plus de 15%, en pourcentage volumique, de grains présentant une circularité (S) inférieure à 0,85.

7. Poudre selon l'une quelconque des revendications précédentes, dans laquelle la fraction granulométrique D₂₀-D₄₀ et/ou la fraction granulométrique D₄₀-D₆₀ comporte plus de 20%, en pourcentage volumique, de grains présentant une circularité (S) inférieure à 0,85.

8. Poudre selon l'une quelconque des revendications précédentes, dans laquelle la fraction granulométrique D₂₀ -D₄₀ et/ou la fraction granulométrique D₄₀-D₆₀ comporte moins de 30%, en pourcentage volumique, de grains présentant une circularité inférieure à 0,85.

9. Poudre selon l'une quelconque des revendications précédentes, dans laquelle la taille médiane D₅₀ est inférieure à 30 µm.

10. Poudre selon la revendication précédente, dans laquelle la taille médiane D₅₀ est inférieure à 20 µm.

11. Poudre selon l'une quelconque des revendications précédentes, dans laquelle la taille médiane D₅₀ est supérieure à 3 µm.

12. Poudre selon la revendication précédente, dans laquelle dans laquelle la taille médiane D₅₀ est supérieure à 5 µm.

13. Poudre selon l'une quelconque des revendications précédentes, dans laquelle la fraction granulométrique D₄₀-D₆₀ comporte moins de 50%, en pourcentage volumique, de grains présentant une circularité (S) inférieure à 0,85.

14. Fil abrasif destiné au sciage de blocs, notamment de blocs de silicium, comportant un fil de support, une poudre selon l'une quelconque des revendications précédentes et un liant fixant, rigidement ou non, les grains de ladite poudre sur ledit fil de support.

15. Procédé de sciage d'un bloc à base de silicium au moyen d'un fil abrasif selon la revendication précédente, adapté de manière à obtenir, à l'issue dudit sciage, une galette d'une épaisseur inférieure à 200 µm.

16. Procédé selon la revendication précédente, la galette présentant une épaisseur inférieure ou égale à 100 µm.

## Patentansprüche

1. Pulver aus Schleifkörnern in erster Linie bestimmt zum Gebrauch bei Siliciumblöcken, wobei das Pulver so ist, dass der granulometrische Anteil D₄₀-D₆₀ mehr als 15% und weniger als 80% in Volumenprozenten, von Körnern mit einer Rundheit (S) von kleiner als 0,85 enthält, und die Prozentanteile D₄₀ und D₆₀ die Prozentanteile der granulometrischen kumulierten Verteilungskurve der Teilchengröße des Pulvers darstellen, die den Korngrößen entsprechen, die es erlauben, die Anteile des Pulvers zu trennen, die jeweils von 40% und 60% in Volumenprozenten gebildet sind, von den Körnern des Pulvers, welche die größten Größen darstellen.

2. Pulver nach dem vorhergehenden Anspruch, in welchem das Verhältnis R₄₀₋₆₀ des Volumenprozentanteils S (D₄₀-D₆₀) der Körner, die eine Rundheit aufweisen, die kleiner als 0,85 ist, in dem granulometrischen Anteinle D₄₀-D₆₀, geteilt durch den mittleren Durchmesser D₅₀ größer ist als 0, 85 und kleiner als 3,5.

3. Pulver nach dem vorhergehenden Anspruch, in welchem das Verhältnis R₄₀₋₆₀ des Volumenprozentanteils S (_{D40}-_{D60}) der Körner, die eine Rundheit kleiner als 0,85 in dem granulometrischen Anteil D₄₀-D₆₀ aufweisen, dividiert durch den mittleren Durchmesser D₅₀, größer ist als 0,85 und kleiner als 2,0.

4. Pulver nach einem der vorhergehenden Ansprüche, in welchem
10% < Δ₂₀₋₄₀₋₆₀ < 30%, oder
15% < Δ₄₀₋₆₀₋₈₀ < 60%,
wobei Δₙ₋ₘ₋ₚ das Verhältnis (S(Dₙ-Dₘ) *-* S(Dₘ-Dₚ))/S(Dₘ-Dₚ) in Prozenten ist,
wobei S(Dᵢ-Dⱼ) der Volumenprozentanteil der Körner ist, die eine Rundheit von kleiner als 0,85 im granulometrischen Anteil Dᵢ-Dⱼ ist.

5. Pulver nach einem der vorhergehenden Ansprüche 1 bis 3, in welchem
10% < Δ₂₀₋₄₀₋₆₀ < 30%, und
15% < Δ₄₀₋₆₀₋₈₀ < 60% ist.

6. Pulver nach einem der vorhergehenden Anspruche, in welchem der granulometrische Anteil D₂₀-D₄₀ mehr als 15% in Volumenprozenten von Körnern aufweist, die eine Rundheit (S) von kleiner als 0,85 aufweisen.

7. Pulver nach einem der vorhergehenden Ansprüche, in welchem der granulometrische Anteil D₂₀-D₄₀ und/oder der granulametrische Anteil D₄₀-D₆₀ mehr als 20% in Volumenprozenten von Körnern beinhaltet, die eine Rundheit (S) von kleiner als 0,85 aufweisen.

8. Pulver nach einem der vorhergehenden Ansprüche, in welchem der granulometrische Anteil D₂₀-D₄₀ und/oder granulometrische Anteil D₄₀-D₆₀ weniger als 30% in Volumenprozenten von Körnern beinhaltet, die eine Rundheit von kleiner als 0,85 aufweisen.

9. Pulver nach einem der vorhergehenden Ansprüche, in welchem die mittlere Größe D₅₀ kleiner als 30µm ist.

10. Pulver nach dem vorhergehenden Anspruch, in welchem die mittlere Größe D₅₀ kleiner als 20µm ist

11. Pulver nach einem der vorhergehenden Ansprüche, in welchem die mittlere Größe D₅₀ größer als 3µm ist.

12. Pulver nach dem vorhergehenden Anspruch, in welchem die mittlere Größe D₅₀ größer als 5µm ist.

13. Pulver nach einem der vorhergehenden Ansprüche, in welchem der granulometrische Anteil D₄₀-D₆₀ weniger als 50% in Volumenprozenten an Körnern beinhaltet, die eine Rundheit (S) von kleiner als 0,85 aufweisen.

14. Schleiffaden zum Sägen von Blöcken, insbesondere von Siliciumblöcken bestehend aus einem Trägerfaden, einem Pulver gemäß einem der vorhergehenden Ansprüche und einem festen oder nicht festen Kleber, der die Körner des Pulvers auf dem Trägerfaden fixiert.

15. Verfahren zum Sägen eines Blocks auf Basis von Silicium mittels eines Schleiffadens nach dem vorhergehenden Anspruch, um arm Ende des Sägevorgangs eine Platte mit einer Dicke von kleiner als 200 µm zu erhalten.

16. Verfahren aus dem vorhergehenden Anspruch, bei dem die Platte eine Dicke von kleiner oder gleich 100µm aufweist.

## Claims

1. An abrasive grain powder, in particular intended for machining silicon ingots, said powder being such that the D₄₀-D₆₀ granulometric fraction comprises more than 15% and less than 80%, as percentages by volume, of grains having circularity (S) of less than 0.85, the D₄₀ and D₆₀ percentiles being the percentiles of the cumulative granulometric distribution curve of the grain sizes of the powder that correspond to the grain sizes that separate the powder fractions respectively constituted by 40% and 60%, as percentages by volume, from grains of the powder having larger sizes.

2. The powder according to the preceding claim, wherein the ratio, R₄₀₋₆₀, of the percentage by volume S(D₄₀-D₆₀) of grains having circularity of less than 0.85 in the D₄₀-D₆₀ granulometric fraction divided by the median diameter D₅₀ is greater than 0.85 and less than 3.5.

3. The powder according to the preceding claim, wherein the ratio, R₄₀₋₆₀, of the percentage by volume S(D₄₀-D₆₀) of grains having circularity of less than 0.85 in the D₄₀-D₆₀ granulometric fraction divided by the median diameter D₅₀ is greater than 0.85 and less than 2.0.

4. The powder according to any one of the preceding claims, wherein:
· 10% < Δ₂₀₋₄₀₋₆₀ < 30%; or
· 15% < Δ₄₀₋₆₀₋₈₀ < 60%;
Δ ₙ₋ₘ₋ₚ being the ratio (S(Dₙ-Dₘ) -S(Dₘ-Dₚ))/S(Dₘ-Dₚ) as a percentage;
S(Dᵢ-Dⱼ) being the percentage by volume of grains having circularity of less than 0.85 in the granulometric fraction Dᵢ-Dⱼ.

5. The powder according to any one of claims 1 to 3, wherein:
· 10% < Δ₂₀₋₄₀₋₆₀ < 30%; and
· 15% < Δ₄₀₋₆₀₋₈₀ < 60%.

6. The powder according to any one of the preceding claims, wherein the D₂₀-D₄₀ granulometric fraction comprises more than 15%, as a percentage by volume, of grains having circularity (S) of less than 0.85.

7. The powder according to any one of the preceding claims, wherein the D₂₀-D₄₀ granulometric fraction and/or the D₄₀-D₆₀ granulometric fraction comprises more than 20%, as a percentage by volume, of grains having circularity (S) of less than 0.85.

8. The powder according to any one of the preceding claims, wherein the D₂₀-D₄₀ granulometric fraction and/or the D₄₀-D₆₀ granulometric fraction comprises less than 30%, as a percentage by volume, of grains having circularity of less than 0.85.

9. The powder according to any one of the preceding claims,
wherein the median size D₅₀ is less than 30 µm.

10. The powder according to the preceding claim, wherein the
median size D₅₀ is less than 20 µm.

11. The powder according to any one of the preceding claims,
wherein the median size D₅₀ is greater than 3 µm.

12. The powder according to the preceding claim, wherein the
median size D₅₀ is greater than 5 µm.

13. The powder according to any one of the preceding claims,
wherein the D₄₀-D₆₀ granulometric fraction comprises less than 50%, as a percentage by volume, of grains having circularity (S) of less than 0.85.

14. An abrasive wire for sawing blocks, especially blocks of silicon, comprising a support wire, a powder according to any one of the preceding claims and a binder fixing the grains of said powder onto said support wire rigidly or otherwise.

15. A method of sawing a block based on silicon by means of an
abrasive wire according to the preceding claim, adapted to obtain a wafer with a thickness of less than 200 µm when said sawing is complete.

16. A method according to the preceding claim, wherein the thickness of the wafer is 100 µm or less.
